# EUROPEAN PATENT SPECIFICATION

(11) **EP 1 926 075 B1**
(45) Date of publication and mention of the grant of the patent: **16.01.2013**
(21) Application number: 06024538.8
(22) Date of filing: 27.11.2006
(51) Int. Cl.: G09B 29/10, G01C 21/36, B60K 35/00, B60K 37/06

(54) **Handheld computer device with display which adapts to the orientation of the device and method for displaying information on such a device**
Tragbarer Computer mit Anzeige, die sich der Lage des Geräts anpasst und Verfahren zur Anzeige von Informationen auf einem derartigen Gerät
Ordinateur portable avec affichage qui adapte son orientation et procédé pour afficher des informations sur un tel ordinateur

(43) Date of publication of application: 28.05.2008
(60) Divisional application: 12184280.1
(73) Proprietor: Harman Becker Automotive Systems GmbH, 76307 Karlsbad (DE)
(72) Inventor: Roessger, Peter, 72631 Aichtal (DE); Ohler, Jens, Becker-Goering-Strasse 16, 76307 Karlsbad (DE)
(74) Representative: Grünecker, Kinkeldey, Stockmair & Schwanhäusser

(56) References cited:
- EP-A- 1 457 868
- DE-A1- 10 056 846
- GB-A- 2 386 488

## Description

### TECHNICAL FIELD OF THE INVENTION

The invention relates to a handheld computer device capable of providing navigation guidance and a method for displaying information content including geographical navigation data and map data.

### BACKGROUND OF THE INVENTION

The association of GPS receivers with handheld computer devices, such as pocket PCs, Personal Device Assistants (PDAs), and mobile phones, has lead to small and easy to use Personal Navigation Devices (PND) that are becoming a standard equipment of every vehicle, providing navigation guidance in either terrestrial, marine or air environments. The incorporation of extra functionalities, such as barometric altimeters, increases the offer of PND specially conceived for outdoor use and matching navigation needs of recreational users.

Existing PNDs already include touch panel displays, providing an intuitive operation of the device and an easy input of instructions, such as travelling destination, preferred map views, menus navigation, etc. Current layouts also deliver a user-friendly operation by positioning the basic control keys around the screen for easy reach. Most PNDs are equipped with a display screen of rectangular shape, rigidly mounted in either a landscape or a portrait orientation, in which the longer screen edge is either parallel or transverse to the line of sight, respectively.

Navigation devices devised to be permanently integrated in a vehicle have been proposed with a mechanism that allows the navigation device to rotate around a support base, either to allow the melding of the navigation device into a vehicle dashboard or to adjust the view angle of the screen with respect to the driver.

European patent application EP 0 976 616 A1 describes a monitor arrangement for integration in a vehicle, which includes a base and an image screen that can be pivoted across the base. The pivoting of the image screen allows the monitor to be placed in a stowage compartment when not in use or over the ventilation grid for operation purposes. In the working position, the screen visibility can be adapted by changing the angle of the image screen with respect to the viewer.

United States patent No. 6 411 502 B1 describes a portable electronic device which includes a sensor to determine whether the housing of the device is aligned upon a horizontal or vertical axis. This sensor delivers its output to a display control which realigns information displayed upon the view screen to shift the displayed information between vertical and horizontal configurations. The input keys within the input area include indicia identifying the function of each key, wherein the indicia are aligned at an angle with respect to the longitudinal axis of the housing. Such angular alignment of the indicia enable the indicia to be easily viewed when the housing is held within the hand of a user at a vertical alignment or mounted upon a console in a horizontal alignment.

Document US 2005/0 20 325 A1 describes a multi-configuration portable electronic device comprising a second body element that is pivotally coupled to a first body element such that the device can be positioned into a plurality of physical configurations. The physical configurations of the device may include a portrait configuration in which the device functions as a wireless phone, and a landscape configuration in which the device functions as a text messaging pager, PDA, handheld computer, electronic organizer, or media player, and a "closed" configuration.

German patent application DE 100 56 846 A1 describes a map display device that comprises a GPS circuit for determining its position, and means to receive and display a map corresponding to the location of the device. The device further comprises means of orientation that are sensors of magnetic North, and which enable the microprocessor to know of what angle it must turn the image contained in the memory. Hence, when the image is displayed on the screen of the device, the geographical North of the image is displayed in the direction of the magnetic North provided by the sensors of magnetic North. In order to allow that the device operates in whatever the position it is held, in other words, held upright or flat, two couples of magneto-resistive films are provided. One of these couples is used when the telephone is held flat, the other used when it is held upright. The switching between the two couples of magneto-resistive sensors is then carried out using a measurement of a plate of the device.

Japanese patent application JP-11051662 describes a display device with a portrait orientated display screen, which can be discretely kept inside a console panel of the automobile when not in use. In order to meet design constrictions imposed by the dimensions of the console panel and of the display screen, a mechanism is devised for allowing the display screen to be rotated from the working orientation to a landscape orientation, so that the display member can fit and be returned back to the console.

However, such rotation functionalities have been proposed so far to solve problems related with design criteria of the vehicles and the dimensions of the PNDs.

The rapid diversification of content and types of information available in PNDs, has lead to situations in which certain orientations of the display screen has advantages over the others, depending on the information being displayed or the interaction needs of the user. For example, the visualization of a 2.5D map or the choice of a Point Of Interest (POI) overlaid onto a map view is made easier in a landscape-oriented display. In contrast thereto, the portrait orientation is more convenient for displaying an advised route on a guiding map, in which the current position is normally displayed in the lower part of the screen and the travelling destination oriented to the upper part.

Consequently, there is an increasing need for handheld computer devices that can provide a variety of navigation information and that allows the user to choose the orientation of the display screen according to the contents being viewed and to the user's interaction needs.

Additionally, since the navigation needs of the user change frequently during the course of a trip, it is desirable that the user may easily change the orientation of the display screen with the device in an operating state and with a minimum of distraction.

### SUMMARY OF THE INVENTION

The present invention aims at overcoming the disadvantages and shortcomings of the prior art systems.

It is therefore an object of the present invention to provide a handheld computer device particularly suited for providing navigation guidance, comprising a display unit whose orientation can be easily changed by the user and the displayed information adapted to the current display orientation while the device is in an operative state.

This object is solved by the invention as claimed in the independent claims 1 and 11. Advantageous embodiments of the invention are defined by the dependent claims.

In the sense of the present invention, a handheld computer device refers to any electronic device which includes both the functionality of a computer and of being portable, such as mobile phones, smart phones, watches, personal digital assistants, personal navigation devices and the like. Although the handheld computer device is devised to be portable, that is to be transported without effort by the user, it might be adapted to be integrated into a fixed unit installed in a vehicle, and easily detachable for being transported. Additionally, the handheld computer device may include other functionalities, such as those of a cell phone, a music player, a camera, and the like.

According to an aspect, a handheld computer device for displaying information content is provided, comprising a navigation unit for receiving signals indicative of geographical location coordinates from a positioning system unit and for outputting signals indicative of the geographical location of the handheld computer device, a display unit for displaying information content, wherein the orientation of the display unit is changeable, and a control unit for controlling the display unit, wherein the control unit is configured for receiving an orientation signal indicative of the orientation of the display unit and for adapting the orientation of the display of the information content in response to the orientation signal.

The display unit may be rigidly attached to the handheld computer device, in this case both the display unit and the handheld computer device being rotated as a whole. Alternatively, the display unit may be rotatable with respect to the handheld computer device body, for example, by rotating around a pivot base.

According to the above configuration, when the orientation of the display unit is rotated in a certain direction by a certain amount with respect to a viewer, the control unit will receive a signal indicative of the current spatial orientation or the change of orientation of the display unit and accordingly adapt the orientation of the display of information content so that the orientation of the displayed information remains constant with respect to the viewer. The information content may include images, map views, menus, text information, and the like. The convenience for the user is therefore increased, since the rotation of the display unit causes an adaptation of the orientation of the displayed information content according to user's preferences or interaction needs.

The display unit is adapted to be rotated in a plane defined by the display unit from a first orientation to a second orientation and the control unit is further adapted to select information content to be displayed depending on the orientation of the display unit.

According to the above configuration, the change of orientation of the display unit does not lead to an adjustment of the size or rescaling of the information content to the dimensions of the current display window but to a selection of the content of information to be displayed according to the current orientation of the display unit.

For instance, if a map view is being displayed in a landscape orientation and the display unit is rotated to a portrait orientation, the scale size of the map view will be maintained while new map data, not displayed in the previous orientation, will be displayed along the longer edge of the display window. Consequently, there is the advantage that the change of orientation of the display unit does not lead to a change of zoom of the map view and the viewer is able to continue viewing the advised route both with the same degree of detail as before rotating the display screen and with increased information in the direction of the user's preference.

According to another example, the handheld computer device comprises access means for accessing a storing medium storing geographical navigation data.

The control unit is further adapted to retrieve the geographical navigation data from the storing medium via the access means and to determine the geographical navigation data to be displayed based on the orientation signal indicative of the orientation of the display unit.

The geographical navigation data may include any type of spatial and/or timing data suitable for determining the current location of the handheld device, for providing navigation guidance, such as advised routes, destination points, map data of cities, countries, geographical data including altitude, barometric information, weather and the like. The storage medium may be incorporated in the handheld computer device or provided as a separate storage medium, such as a server, a memory card, a flash memory, a CD, a DVD, or any other type of portable storage medium. The access means are any means suitable for accessing internal storage medium, such as an internal bus, a connection of the control unit to an internal memory, or an input/output interface suitable for accessing an external storage medium, such as a USB port, a network interface for accessing a server, wired or wireless communications means, and the like.

The above configuration has the advantage that geographical navigation data can be downloaded on demand by the user from a server or kept in an external portable storage medium. Additionally, the control unit retrieves the geographical data according to the display orientation, leading to an increased economy of memory space in the handheld computer device.

The handheld computer device comprises an orientation detection unit for automatically detecting the orientation of the display unit and for outputting to the control unit the orientation signal indicative of the orientation of the display unit. The control unit is adapted to process the orientation signal indicative of the orientation of the display unit and to adapt the display of information in response to the orientation signal.

Consequently, the user only has to rotate the display unit to the desired orientation, and the display of information is automatically adapted without the need of further instructions from the user. This configuration is particularly advantageous in situations where the attention of the user is continuously demanded by other tasks, such as when driving a vehicle.

According to a further example, the gravity sensor is adapted to detect the spatial orientation of one point of the display unit with respect to another point of the display unit. In the case of a rectangular display window, the orientation of the display may be detected by determining which edge of the display unit is lower than the others.

According to another example, the handheld computer device comprises a user machine interface for receiving an input of the orientation of the display unit and for outputting to the control unit the orientation signal indicative of the orientation of the display unit.

For example, in personal navigation devices designed for outdoor use and to be carried attached to a part of the body, such as in the wrist, it may be desirable to use the manual mode to avoid a rotation of the displayed images induced by the body movement.

In a further example, the user machine interface is further adapted for receiving an instruction for activating or deactivating one of the automatic mode of detection of the orientation of the display unit and the manual mode of input of the orientation signal indicative of the orientation of the display unit.

According to the above configuration, the handheld computer device may include the functionalities of an automatic detection and of a manual input of the orientation of the display unit, the user interface allowing the user to select the preferred mode. Additionally, the user may deactivate or activate any of the modes. Alternatively, the device may include only one of the automatic or the manual modes of detection, the user machine interface allowing the user to deactivate or activate the detection mode when necessary.

For instance, for navigation devices installed in aircraft or marine vehicles, the automatic rotation of the displayed information is not always desirable, namely when the vehicle undergoes rapid manoeuvres. Therefore, it is advantageous to be able to deactivate the automatic detection and/or to switch to a manual mode when necessary.

According to another example, the handheld computer device further comprises a key panel for inputting instructions, wherein the orientation of the key panel is changeable, the key panel comprising at least one key for inputting instructions, said key having at least one label corresponding to at least one orientation of the key panel. The key panel further comprises at least one illumination component for illuminating each label corresponding to an orientation of the key panel, and an illumination control unit for selectively activating the illumination component in response to the orientation of the key panel. The key panel may be incorporated in the display unit, being rotated when the display unit is rotated, or incorporated in the handheld computer device.

According to the above configuration, when the key panel is rotated with respect to the viewer, only the labels associated with a given orientation are illuminated or displayed to the user. Consequently, the user can easily identify the label and the function of each key, which greatly facilitates the operation of the key panel by the user in all circumstances.

In another example, the handheld computer device comprises a front plate adapted to make invisible at least one of said labels.

According to another example, the handheld computer device comprises a key panel for inputting instructions, wherein the orientation of said key panel is changeable, the key panel comprising at least one key for inputting instructions, said key comprising a display screen for displaying at least one label corresponding to at least one orientation of the key panel. The key panel further comprises an illumination control unit for selectively activating the display of the label corresponding to the at least one orientation of the key panel in response to the orientation of the key panel. The display screen associated with each key may be a mini TFT display or any type of display suitable for displaying labels and icons.

In a further example, the user machine interface of the handheld computer device comprises a touch screen with at least one touch-sensitive zone for inputting instructions, the control unit being further configured to display at least one icon corresponding to the at least one touch-sensitive zone of the touch screen and to adapt at least one of orientation and position of the displayed icon based on the orientation signal indicative of the orientation of the display unit, and a correlation unit for correlating the at least one touch-sensitive zone of the touch screen with the at least one displayed icon.

According to this configuration, the convenience for the user is increased since when the touch screen is rotated, the orientation of the icon and the position where the icon is displayed is adapted to the current orientation of the display unit. When the touch screen is rotated, the position of a touch key associated with a specific function changes with respect to the touch screen in order to maintain the orientation of the touch keys with respect to the viewer. This is possible by correlating each touch sensitive zone with the displayed icons, which allows that a touch sensitive zone associated to a specific function will be always displayed at a similar relative location from the point of view of the viewer. In this way, it is maintained both the readability of the symbols and text displayed in association with a touch sensitive zone and the speed of selection of a touch key, since the user does not has to search for a specific touch key every time the display unit is rotated.

According to a further example, a handheld computer device is provided, wherein the navigation unit, the display unit, the control unit and the user machine interface are adapted to be integrated in a vehicle head unit and are connected with each other by a data bus.

According to another example, the positioning system unit outputs to the navigation unit signals delivered by a satellite positioning system. The satellite positioning system may be the Global Positioning System (GPS) or any other satellite based positioning system appropriate for providing positional or navigation information.

It should be noted that the above-explained embodiments might be applied to any handheld computer device adapted to provide navigation guidance, such as pocket PCs, personal navigation devices, personal assistant device, mobile phones, and the like.

### BRIEF DESCRIPTION OF THE FIGURES

Further advantageous embodiments of the present invention will be described in more detail with reference to the accompanying figures and drawings, in which:
- **Fig. 1**: schematically depicts a handheld computer device according to illustrative embodiments of the present invention;
- **Fig. 2**: illustrates an example of rotation of the display unit and the adaptation of a map view to the orientation of the display unit;
- **Fig. 3**: shows a flow chart illustrating a process of adaptation of the displayed content to the orientation of the display unit;
- **Fig. 4**: illustrates an example of a key panel of a handheld computer device, in which only the key labels corresponding to a certain orientation of the key panel are illuminated.

### DETAILED DESCRIPTION OF THE INVENTION

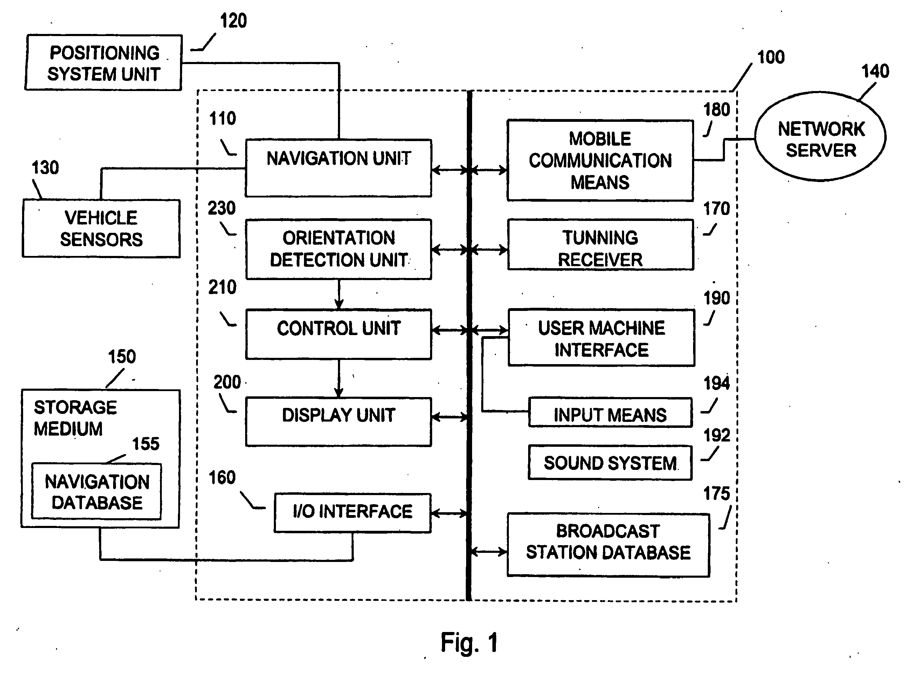

Figure 1 shows an overview of a handheld computer device 100 according to an advantageous embodiment of the present invention.

The handheld computer device 100 comprises a navigation unit 110 for receiving signals indicative of the device geographical location from a positioning system unit 120. These signals may be delivered to the positioning system unit 120 by a satellite positioning system and include positional and timing data that enable the handheld computer device 100 to determine its current position. Alternatively, the navigation unit 110 may receive from the positioning system unit 120 signals which already include data indicative of the geographical location of the device, such as latitude, longitude and altitude, and which are transmitted by an appropriate positioning system.

According to an advantageous embodiment, the navigation unit 110 uses the Global Positioning System (GPS) to determine the precise location of a vehicle, person, or other asset to which the handheld computer device 100 is attached and to record the position of the asset at regular intervals. The operation of the GPS system is well known to persons skilled in the art, such that no details have to be provided here for the purpose of understanding the present invention.

The data provided by the positioning system unit 120 are typically geographical coordinates in standardized form, which are detected in real time according to the device's location using satellite communication. The recorded location data can be stored within the navigation unit 110, or it may be transmitted to a central location data base, or internet-connected computer, using a cellular (GPRS), radio, or satellite modem embedded in the unit. This allows the asset's location to be displayed against a map backdrop either in real-time or when analysing the track later, using customized software.

Additionally, the navigation unit 110 may permanently receive and decode other signals related to the asset's position. For instance, for the purpose of vehicle navigation guidance, the navigation unit 110 may receive and analyze information provided by vehicle sensors 130, such as a wheel sensor and a gyrocompass, to calculate current position and route data of the vehicle.

Moreover, as will be appreciated by those skilled in the art, the navigation unit 110 may operate in that it receives a user's input relating to a destination, then calculates the respective route and outputs map data and/or indications for guiding the user along the route from a start point to the desired destination. Alternatively, the one or more routes may be entered in advance and the current position of the handheld device is compared with the initially entered route, wherein a deviation may be reported to the user.

The positioning system unit 120 may be incorporated in the handheld computer device 100 or, as illustrated in Fig. 1, be an external positioning system receiver to which the handheld computer device 100 accesses through suitable communication means embedded in the navigation unit 110, such as Bluetooth®, USB, serial, or the like.

It may also be devised that the navigation unit 110 provides navigation guidance based on the determination of routes or other navigation related information that take place at an external device, for instance, a server computer 140 that receives and communicates data from and to the navigation unit 110, respectively, by wired or wireless communication means (180).

As shown in figure 1, the handheld computer device 100 accesses to a navigation database 155 stored in an external storing medium 150, such as a computer server or the like, and is able to read/write digital data from/to the storage medium 150. The storing medium 150 can be any form of mass storage, such as flash memory, memory card, CD ROM, DVD, hard disk or the like, for storing and providing navigation data, such as map data relating to a geographical location, route data, altitude, and the like.

However, the navigation database 155 may also be provided local to the device, contained in a storage medium fully integrated in the navigation unit 110.

The access means 160 are any means suitable for accessing internal storage medium, such as an internal BUS, a connection of the control unit 210 to an internal memory, or an input/output interface 160 suitable for accessing the external storage medium 150, such as a USB port, a network interface for accessing a server, wired or wireless communications means, and the like.

By using the navigation data provided by the navigation database 155, the navigation unit 110 is able to output map views, including 2D, 2.5D and 3D maps, showing the present location and the vicinity around the location of the device. Other geographical related data might be provided, including altitude, water depth, maps of recreational lakes, pedestrian navigation for parks and city centres. Additionally, the navigation database 155 may also provide information on other types of services related with location, such as a list of broadcast stations with good reception quality, and/or provide information on particular points of interest for the user along the route, such as pharmacies, restaurants, gas stations, and the like.

The handheld computer device 100 may further comprise a tuning receiver 170 for broadcast reception, such as an analog AM/FM or digital DAB (digital audio broadcast) tuner or an analog or digital television tuner. These components provide information on traffic conditions, weather reports and forecasts, and/or entertainment to the user. The primary function of the tuning receiver 170 is to receive broadcast signals of a broadcast station selected by the user. To this end, the receiver searches the frequency band for available broadcast stations, preferably provides a list of available stations and tunes its receiving unit to a selected station. Moreover, the tuning receiver 170 typically comprises a mechanism to either simultaneously search during reproduction of a program for further available stations or includes a background tuner, which continuously scans the available frequency band for broadcast stations with good reception properties. To assist the search operation, the tuning receiver 170 may decode any additional information provided in the broadcast signal, such as digital data included in the broadcast station signal. For instance, digital radio receiver information is included in an RDS (Radio Broadcast System) data stream for providing traffic information, broadcast information, etc.

Hence, the tuning receiver 170 is permanently and continuously scanning the available frequency bands to collect data on receivable broadcast stations. This data is stored in local databases. Additionally, there exists a broadcast station database 175, e.g. for storing data on the television or radio broadcast stations including frequencies, names and position information of the broadcast stations.

Generally, the local and broadcast station databases 175 may be installed as integral parts of the tuning receiver 170, for example, as an SD RAM or flash memory or as any part of the handheld computer device 100.

As broadcast stations transmitting one and the same program can be identified by their station ID (PI-Code in the radio broadcast RDS System, in the case of a television tuner, the video text signal may provide a channel ID for this purpose), the database can be structured or ordered either automatically or according to the user's preferred selection with respect to desired broadcast stations or their operational parameters. The receivable broadcast stations may be displayed in the device's display unit, for example in the form of a list from which the user may select the desired station by scrolling the list using a mouse or keys provided in the device or by directly inputting the selected station via touch, in the case of devices comprising a touch screen.

As illustrated in Fig. 1, the handheld computer device 100 includes mobile communication means 180 for receiving speech and data signals according to an applicable standard, such as GSM, UMTS or others. However, instead of an integrated mobile communication unit, the handheld computer device 100 may simply include communication interface means that enable a wired or wireless connection of the handheld device to, for instance, a mobile telephone. As will be appreciated by a person skilled in the art, the mobile communication means 180 communicates wirelessly within a cellular network system, comprising one or a plurality of broadcast stations (called base stations) for receiving and/or sending speech or data information to and from other wireless or wired communication units, such as a network server 140 or user terminals.

The handheld computer device 100 illustrated in Fig. 1 further comprises a user machine interface 190 that includes a sound system 192 and input means 194. The input means 194 are any means suitable for receiving instructions input by the user and may include any of a keyboard, a joystick, a key panel, a scroll mouse, a speech recognition module, and/or a touch screen panel for inputting instructions by touch. The sound system 192 may be installed as a separate unit or module. The user machine interface 190 may output route and/or traffic information e.g. in visual form to a display unit 200.

The display unit 200 can be either a separate display for outputting this information or can be of a split type showing the information together with operational information of other components of the system, such as data relating to the audio system, warning messages relating to a hazardous condition or the position of the vehicle. Alternatively, the route and/or traffic information is output in the form of audible signals, which are generated by a voice generation module and output by the sound system 192.

The display unit 200 comprises a display screen or display window for displaying information pertaining to the use of the handheld computer device 100, such as information on the device status, configuration options, menus, and information related with navigation guidance. The display can be an LCD, or any other type of display suitable for displaying information.

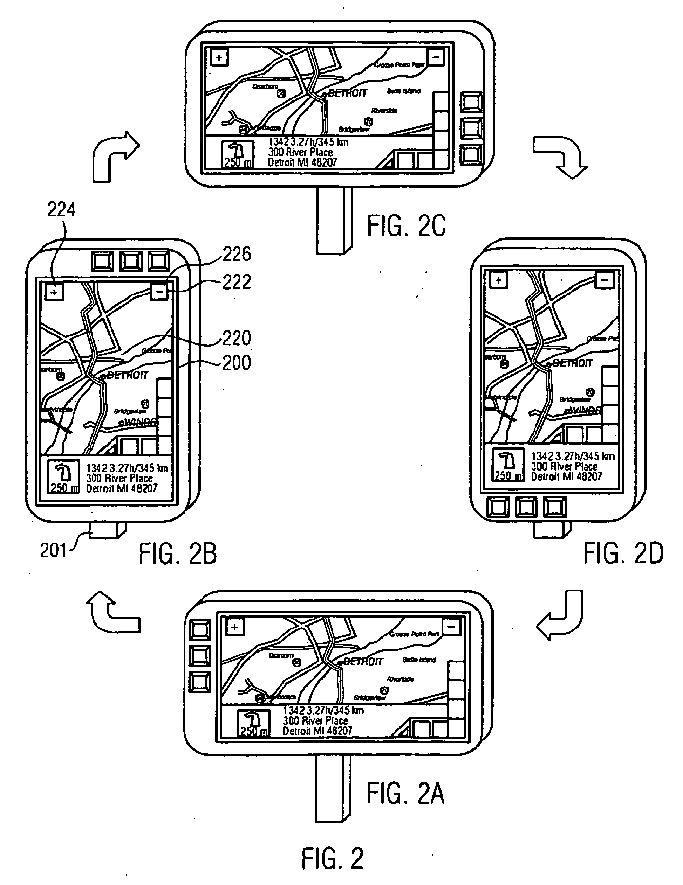

According to the present invention, the orientation of the display unit 200 can be changed with respect to the viewer. As shown in Fig. 2, the display unit 200 is mounted on a base or pivot around which it can be rotated. However, the display unit 200 may be rigidly integrated on the handheld device, its orientation being changed when the handheld computer device 100 is rotated or alternatively, the display unit 200 may be made rotatable with respect to the handheld computer device 100.

The adaptation of the content and the orientation of the information to be displayed are controlled by a control unit 210 in response to an orientation signal indicative of the orientation of the display unit 200. The orientation signal indicates the current display orientation or can additionally indicate a change of orientation of the display unit 200.

As illustrated in Fig. 2, the display unit 200 is rotatable in any direction in a plane defined by the display unit 200. The orientation of the map view is adapted to each new orientation of the display unit 200, in a way that the orientation of the displayed content remains the same with respect to the viewer.

As illustrated in Fig. 2A, when the handheld computer device 100 is displaying a two-dimensional (2D) map view in a landscape orientated display, giving indications on a advised route that is displayed starting from the current location at the bottom part of the display towards the destination at the upper part of the display, it might become advantageous at a certain moment of the travelling to view more map data in the direction of travelling than in the direction transverse to the advised route while maintaining the same degree of zoom. Thus, when the viewer rotates the display unit 200 of 90° to a portrait orientation (Fig. 2B or Fig. 2D), the control unit 210 instructs the adaptation of the map view orientation to the current orientation of the display window. Additionally, since in the portrait orientation the edge of the display window along the travelling direction is longer, the control unit 210 will also adapt the content of information to be displayed, such as geographical and position data, to the current dimensions of the display unit 200 in each direction. Therefore, in the current portrait orientation more navigation information is displayed along the travelling direction (aligned with the longer edge of the display window) than in the previous landscape orientation, in which more information was displayed in the transverse direction.

In a similar manner, if the user is using the display unit 200 in a portrait orientation (Fig. 2B or Fig. 2D) and needs to obtain more information about POI around the current location, the user may rotate the display unit 200 to a landscape orientation, in which the longer edge is aligned in the direction transverse to the travelling direction (Fig. 2A or Fig. 2D). In such a case, the information of POI to be retrieved by the control unit 210 is selected according to the edge size of the display window, since more information on POI can be displayed in the direction transverse to the travelling direction than in the previous orientation, in which more POI were being displayed along the travelling direction.

Consequently, when the lateral dimensions of the display window are not the same, the size of the display window edges in a given direction changes when the display unit 200 is rotated, and the information content being displayed is adapted in order to maintain the scale of the map view and to display more information along the longer edge of the display window. Therefore, the viewer is able to continue viewing the advised route with the same degree of detail as before rotating the display screen and with increased information in the direction of his/her needs.

The above example was described with reference to a display unit 200 that can be rotated in a plane defined by the display unit 200. However, a skilled person will recognize that the display unit 200 or the handheld device may be made movable in any direction with respect to the viewer or its attaching base in order to improve the visibility angle of the display screen with respect to the viewer, avoid undesirable effects from light reflexions, fit the device inside a case when not in use, etc. Moreover, the display unit 200 may rotate asymmetrically around a pivot base. A mechanism may also be incorporated for allowing the angle of the plane defined by the display unit 200 to be changed with respect to the viewer in order to adapt the display visibility to the particular circumstances where the device 100 is being employed.

Additionally, the user machine interface 190 may include a touch screen 220 with at least one touch sensitive zone 222 for the input of instructions by contact or touch with a contact body. The touch sensitive zones are active regions of the touch screen 220 that may be activated by any means induced by contact, such as contact pressure and infrared radiation. In association with each touch key is displayed a label or icon 226 indicative of the specific function that is activated when the respective touch sensitive zone is touched. As illustrated in Fig. 2, the touch keys for increasing 222 and decreasing 224 the zoom of the map view are identified by the labels "+" and "-", respectively.

The display of the icons or labels specifying the function of each touch key is controlled by the control unit 210, which adapts the orientation and position of the display of the touch key icon based on the orientation signal indicative of the current orientation of the display unit 200. Additionally, since the rotation of the display unit 200 causes the position of a same active region in the touch screen 220 to change with respect to the viewer, the handheld computer device 100 comprises a correlation unit 240 that correlates each active region or touch sensitive zone of the touch screen 220 with the icon being displayed and with touch key function specified by the displayed icon.

Therefore, when the display unit 200 is rotated, each label is adapted to be displayed with the same orientation and position with respect to the viewer and correlated with the active region of the touch screen 220 corresponding to the location where the label is being displayed. In this way, a touch key associated with a specific function is always displayed at the same position or with the same orientation with respect to the viewer and the user does not have to search for a specific touch key on the touch screen 220 every time the display unit 200 is rotated. For example, the active region of the touch screen 220 located at the upper left corner of the display unit 200 in Fig. 2B, and identified by the label "+", is located at the upper right corner of the display unit 200 in Fig. 2C. However, irrespective of the display unit orientation, the control unit 210 instructs that the icon "-" be always displayed at the upper right corner of the display window with respect to the viewer and the correlation unit 240 correlates the active region at this location with the function specified by the icon "-". Consequently, the user will be able to decrease the zoom of the map view by touching always on a touch key 222 at the upper right corner of the display window, irrespective of the orientation of the display unit 200.

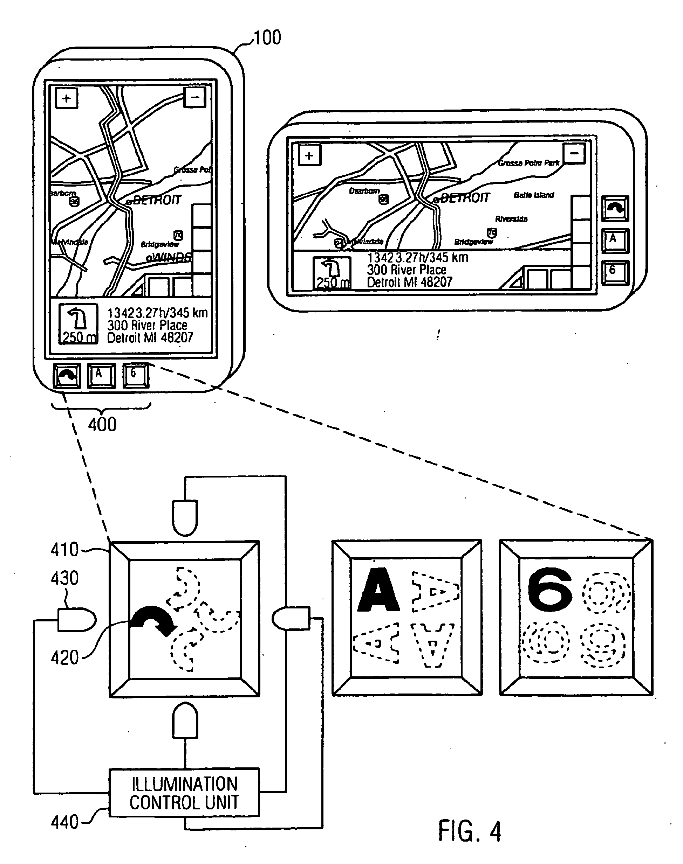

According to an advantageous embodiment, a further orientation signal is generated by an instruction input by the user via the user machine interface means 190. For example, as shown in Fig. 4, the handheld computer device 100 may comprise a rotate key 410 that causes the displayed map view to rotate by 90° under manipulation of the rotate key 410. Instead of the rotate key 410, the user machine interface 190 may include other keys for instructing on the display orientation, such as keys for selecting between a portrait and a landscape orientation, keys for introducing digits and/or alphanumeric characters and inputting a rotation angle or rotate instruction, respectively, and the like. The orientation of the displayed information may also be instructed by voice via a voice recognition module.

The handheld computer device 100 comprises an orientation detection unit 230 for automatically detecting the rotation of the display unit 200 and for outputting to the control unit 210 the orientation signal indicative of the display unit rotation.

The orientation detection unit 230 may comprise any means suitable for detecting the rotation of rigid bodies and which are well known for those skilled in the art. For instance, a switching mechanism between portrait and landscape orientation display can be devised by incorporating a switch in the base 201 around which the display unit 200 can be pivoted, the switch being mechanically pressed when the display unit 200 is in the portrait orientation and therefore producing an signal indicative of this orientation.

The orientation detection unit 230 comprises gravitation-controlled detectors well known in the art. The mechanism of detection may be based on the weight of an element internal to the gravitation-controlled detector, such as the displacement of a drop of mercury inside a sealed compartment that is incorporated in the display unit 200. When the display unit 200 is rotated, the mercury drop moves under the action of gravity and wets a particular electrical contact at certain orientations, producing an electric signal indicative of the display unit orientation.

Alternatively, a mechanism based on piezoelectricity or strain gauge may be provided, wherein the differential weight of an element of the display unit 200 is determined. For example, it might be devised a configuration of three piezoelectric sensors disposed along three mutually perpendicular directions within the plane of the display unit 200, each sensor measures the gravitation force in the respective direction. These three measured quantities together yield the overall spatial orientation of the display unit 200 with respect to the direction of gravity.

The automatic detection of orientation and the input mode by the user may be simultaneously provided in the handheld computer device 100, the user machine interface 190 including means for allowing a selection between the desired detection modes. Additionally, the user interface may further allow the activation or deactivation of one or both of the detection modes.

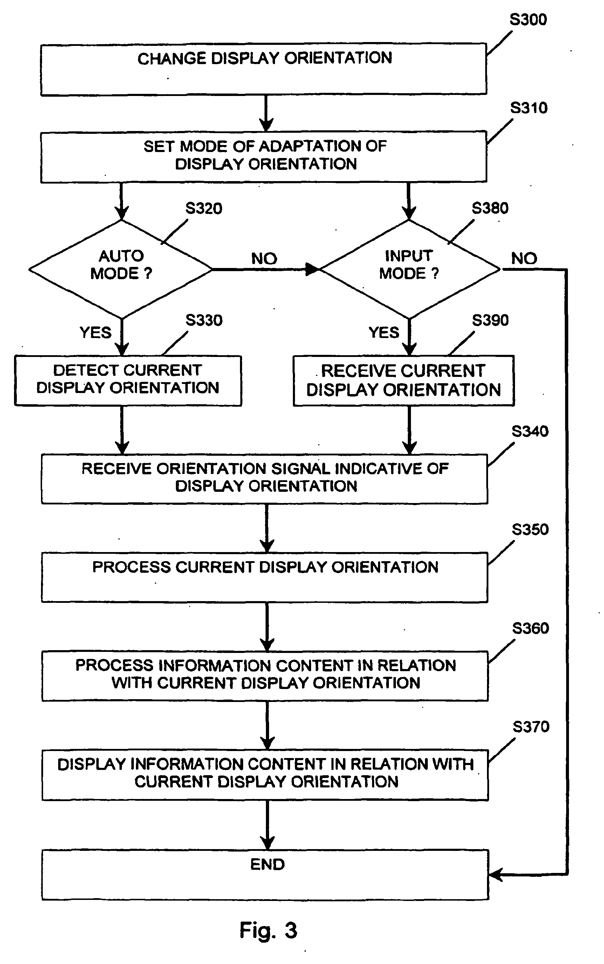

Fig. 3 illustrates an example of a method for adapting the displayed information content to the orientation of the display unit 200 according to an advantageous embodiment, in which the handheld computer device 100 includes both the automatic mode and the input mode of the display unit orientation. After the handheld computer device 100 receives signals indicative of the geographical location of the device and outputs position data according to the device location, information content providing navigation guidance or other types of information content related with the device location is selected and processed by the control unit 210 for being displayed in the display unit 200.

After changing the orientation of the display unit (S300), the user selects the detection mode of the orientation of the display unit (S31 0). However, the detection mode may also be selected before rotating the display unit (200).

If the user selects the automatic mode (S320), the orientation detection unit 230 detects automatically the orientation or change of orientation of the display unit 200 and outputs to the control unit 210 an orientation signal indicative of the orientation or change orientation of the display unit (S330). The control unit 210 receives the orientation signal (S340) and processes the received signal for determining the current orientation of the display unit (S350). The information content to be displayed is processed by the control unit (S360), for adapting the orientation of the display of the information content to the current orientation of the display unit 200. Depending on the size of the display unit window, the control unit 210 may be configured for selecting and processing different information content to be displayed in response to the received orientation signal. Finally, the control unit 210 instructs the display of the processed information content in relation with the current display orientation (S370).

If the user selects the mode of inputting the orientation or change of orientation of the display unit (S380), the handheld computer device 100 waits for the user to input an instruction via the user machine interface means 190. When the instruction is received, the user machine interface means 190 outputs to the control unit 210 an orientation signal indicative of the display orientation or change of the display orientation (S390). Once the orientation signal is received by the control unit 210, the process of adaptation of the displayed information content to the current orientation of the display unit 200 is the same as described for the automatic detection mode.

In case the user activates neither the automatic mode nor the input mode, the display of information content does not change with the rotation of the display unit 200.

As will be recognizable by those skilled in the art, the process described above can adapted for a handheld computer device 100 including only the automatic detection mode.

Fig. 4 shows a handheld computer device 100 provided with a key panel 400 for enabling the input of instructions by the user. The key panel 400 may comprise one or more keys or buttons, each button 410 including at least one label 420 associated with a specific orientation of the key panel 400. In the example illustrated in Fig. 4, each button includes four labels disposed with different orientations and an illumination component 430 is provided for illuminating each label 420. The labels are selectively illuminated under control of an illumination control unit 440, which in response to an orientation signal indicative of the key panel 400 orientation activates the illumination component 430 associated with the specific label 420. The illumination control unit 440 may receive the orientation signal from the control unit 210, the orientation detection unit 230 and/or the input means.

The number of buttons comprised in the key panel 400, the number or type of labels associated with each button as well as the number of illumination components is not limited to the above example. Additionally, the selective illumination of the key panel 400 is not restricted to the above example and many other configurations known in the art may be implemented. For instance, it may be devised a configuration of light guides coupled to two, three or four LEDs, depending on the number of orientations of the labels, in order to illuminate simultaneously all the labels corresponding to the same orientation using the same illumination component. This configuration is particularly advantageous for key panels including arrays of buttons, since it allows a reduction on energy and heating costs.

In an alternate configuration, the buttons of the key panel 400 may be outfitted with mini-TFT screens for displaying icons, writings or labels on the buttons. In this case, an illumination control unit is provided for displaying the icons with an orientation correspondent to the orientation of the key panel 400.

Finally, it is clear to a skilled person in the art that the above-described embodiments can be combined with each other in an advantageous manner.

## Claims

1. A handheld computer device for displaying information content including geographical navigation data and map data, said handheld computer device (100) comprising:
a navigation unit (110) for receiving signals indicative of geographical location coordinates from a positioning system unit (120) and for outputting signals indicative of the geographical location of the handheld computer device (100);
a display unit (200) for displaying the information content in a display window and adapted to be rotated with respect to a viewer in a plane defined by said display unit (200) from a first orientation to a second orientation; and
a control unit (210) for controlling the display unit (200); wherein the control unit (210) is adapted to retrieve the geographical navigation data from a storing medium and to determine the geographical navigation data to be displayed based on the orientation signal; and
an orientation detection unit (230) comprising a gravity sensor adapted to automatically detect a current orientation of the display unit (200) with respect to the direction of gravity, and to output an orientation signal indicative of the current orientation to the control unit (210);
**characterized in that**
if the display unit (200) is rotated from the first orientation to the second orientation while a map view is being displayed,
the control unit (210) is configured to receive said orientation signal indicative of the second orientation of the display unit (200), to process said orientation signal and to adapt the orientation and the content of the display of the information content in response to said orientation signal in a way that the orientation and scale size of the map view remains the same with respect to the viewer, while new map data, not displayed in the first orientation, is displayed along a direction aligned with a longer edge of the display window in the second orientation than along the same direction in the previous first orientation.

2. The handheld computer device according to claim 1, further comprising:
access means (160) for accessing the storing medium, said storing medium storing geographical navigation data:

3. The handheld computer device according to claim 2, wherein said gravity sensor is adapted to detect the spatial orientation of one point of the display unit (200) with respect to another point of the display unit (200).

4. The handheld computer device according to any of claims 1 to 3, further comprising:
a user machine interface (190) for receiving a further input of the orientation of the display unit (200) and for outputting to the control unit (210) a respective orientation signal indicative of the orientation of the display unit (200).

5. The handheld computer device according to any of claims 1 to 4, further comprising:
a key panel (400) for inputting instructions, wherein the orientation of said key panel (400) is changeable;
said key panel (400) comprising:
at least one key (410) for inputting instructions, said key (410) having at least one label (420) corresponding to at least one orientation of the key panel (400);
at least one illumination component (430) for illuminating each label (420) corresponding to an orientation of the key panel (400); and
an illumination control unit (440) for selectively activating the illumination component (430) in response to the orientation of said key panel (400).

6. The handheld computer device according to claim 5, further comprising a front plate adapted to make invisible at least one of said labels (420).

7. The handheld computer device according to any of claims 1 to 4, further comprising:
a key panel (400) for inputting instructions, wherein the orientation of said key panel (400) is changeable;
said key panel (400) comprising:
at least one key for inputting instructions, said key comprising a display screen for displaying at least one label corresponding to at least one orientation of the key panel (400); and
an illumination control unit for selectively activating the display of the label corresponding to the at least one orientation of the key panel (400) in response to the orientation of said key panel (400).

8. The handheld computer device according to any of claims 1 to 7, wherein
said user machine interface (190) further comprises a touch screen (220) with at least one touch-sensitive zone (222) for inputting instructions;
said control unit (210) being further configured to display at least one icon (226) corresponding to the at least one touch-sensitive zone (222) of the touch screen (220) and to adapt at least one of orientation and position of the displayed icon (226) based on the orientation signal indicative of the orientation of the display unit (200); and
a correlation unit (240) for correlating the at least one touch-sensitive zone (222) with the at least one displayed icon (226). 8

9. The handheld computer device according to any of claims 1 to 8, wherein the navigation unit (110), the display unit (200), the control unit (210) and the user machine interface (190) are adapted to be integrated in a vehicle head unit and are connected with each other by a data bus.

10. The handheld computer device according to any of claims 1 to 9, wherein the positioning system unit (120) outputs to the navigation unit (110) signals provided by a satellite positioning system.

11. A method for displaying information content, including geographical navigation data and map data, on an handheld computer device (100) comprising a display unit (200) adapted to be rotated with respect to a viewer in a plane defined by the display unit (200) from a first orientation to a second orientation, the method comprising the following steps:
receiving geographical location coordinates and outputting position data according to a location of the handheld computer device (100);
receiving an orientation signal indicative of an orientation of the display unit (200);
retrieving the geographical navigation data from a storing medium und determining the geographical navigation data to be displayed based on the orientation signal;
adapting the orientation of the display of the information content in response to the orientation signals;
displaying the information content in a display window of the display unit (200) in accordance with said orientation of the display unit (200); and
automatically detecting a current orientation of the display unit (200) with respect to the direction of gravity using a gravity sensor, and outputting an orientation signal indicative of the current orientation to the control unit;
**characterized by**
if the display unit (200) is rotated from the first orientation to the second orientation while a map view is being displayed, adapting the orientation and the content of the display of the information content in response to said orientation signal in a way that the orientation and scale size of the map view remains the same with respect to the viewer, while new map data, not displayed in the first orientation, is displayed along a direction aligned with a longer edge of the display window in the second orientation than along the same direction in the previous first orientation.

12. The method according to claim 11, further comprising the step of setting a manual mode for determining the orientation of the display unit (200).

13. The method according to claim 12, further comprising the step of inputting the orientation signal of the display unit (200) when said set mode is the manual mode.

## Patentansprüche

1. Tragbares Computergerät zum Anzeigen von Informationsinhalt, einschließlich geografischer Navigationsdaten und Kartendaten, wobei das tragbare Computergerät (100) Folgendes umfasst:
eine Navigationseinheit (110) zum Empfangen von Signalen, die geografische Standortkoordinaten angeben, von einer Positionsbestimmungssystemeinheit (120) und zum Ausgeben von Signalen, die den geografischen Standort des tragbaren Computergeräts (100) angeben;
eine Anzeigeeinheit (200) zum Anzeigen des Informationsinhalts in einem Anzeigefenster, die angepasst ist, um im Verhältnis zu einem Betrachter in einer durch die Anzeigeeinheit (200) definierten Ebene von einer ersten Lage in eine zweite Lage gedreht zu werden; und
eine Steuerungseinheit (210) zum Steuern der Anzeigeeinheit (200), wobei die Steuerungseinheit (210) angepasst ist, um die geografischen Navigationsdaten von einem Speichermedium abzurufen und basierend auf dem Lagesignal die darzustellenden geografischen Navigationsdaten zu bestimmen; und
eine Lageerkennungseinheit (230), die einen Schwerkraftsensor umfasst, der angepasst ist, um automatisch eine aktuelle Lage der Anzeigeeinheit (200) im Verhältnis zur Richtung der Schwerkraft zu erkennen und um ein Lagesignal, das die aktuelle Lage angibt, an die Steuerungseinheit (210) auszugeben;
**dadurch gekennzeichnet, dass**
wenn die Anzeigeeinheit (200) von der ersten Lage in die zweite Lage gedreht wird während eine Kartenansicht angezeigt wird,
die Steuerungseinheit (210) konfiguriert ist, um das Lagesignal, das die zweite Lage der Anzeigeeinheit (200) angibt, zu empfangen, das Lagesignal zu verarbeiten und die Lage und den Inhalt der Anzeige des Informationsinhalts als Reaktion auf das Lagesignal derart anzupassen, dass die Lage und der Größenmaßstab der Kartenansicht im Verhältnis zum Betrachter gleich bleiben, während neue Kartendaten, die in der ersten Lage nicht angezeigt wurden, entlang einer Richtung angezeigt werden, die mit einer Kante des Anzeigefensters gleichgerichtet ist, die in der zweiten Lage länger ist als entlang der gleichen Richtung in der vorherigen ersten Lage.

2. Tragbares Computergerät nach Anspruch 1, das ferner Folgendes umfasst:
Zugriffmittel (160) zum Zugreifen auf das Speichermedium, wobei das Speichermedium geografische Navigationsdaten speichert.

3. Tragbares Computergerät nach Anspruch 2, wobei der Schwerkraftsensor angepasst ist, um die räumliche Lage eines Punktes der Anzeigeeinheit (200) im Verhältnis zu einem anderen Punkt der Anzeigeeinheit (200) zu erkennen.

4. Tragbares Computergerät nach einem der Ansprüche 1 bis 3, das ferner Folgendes umfasst:
eine Benutzerschnittstelle (190) zum Empfangen einer zusätzlichen Eingabe der Lage der Anzeigeeinheit (200) und zum Ausgeben eines entsprechenden Lagesignals, das die Lage der Anzeigeeinheit (200) angibt, an die Steuerungseinheit (210).

5. Tragbares Computergerät nach einem der Ansprüche 1 bis 4, das ferner Folgendes umfasst:
ein Tastenfeld (400) zum Eingeben von Anweisungen, wobei die Lage des Tastenfelds (400) veränderbar ist;
wobei das Tastenfeld (400) Folgendes umfasst:
wenigstens eine Taste (410) zum Eingeben von Anweisungen, wobei die Taste (410) wenigstens eine Kennzeichnung (420) aufweist, die der wenigstens einen Lage des Tastenfelds (400) entspricht;
wenigstens eine Beleuchtungskomponente (430) zum Beleuchten jeder Kennzeichnung (420), die einer Lage des Tastenfelds (400) entspricht; und
eine Beleuchtungssteuerungseinheit (440) zum selektiven Aktivieren der Beleuchtungskomponente (430) als Reaktion auf die Lage des Tastenfelds (400).

6. Tragbares Computergerät nach Anspruch 5, das ferner eine Frontplatte umfasst, die angepasst ist, um wenigstens eine der Kennzeichnungen (420) unsichtbar zu machen.

7. Tragbares Computergerät nach einem der Ansprüche 1 bis 4, das ferner Folgendes umfasst:
ein Tastenfeld (400) zum Eingeben von Anweisungen, wobei die Lage des Tastenfelds (400) veränderbar ist;
wobei das Tastenfeld (400) Folgendes umfasst:
wenigstens eine Taste zum Eingeben von Anweisungen, wobei die Taste einen Anzeigebildschirm zum Anzeigen der wenigstens einen Kennzeichnung, die wenigstens einer Lage des Tastenfelds (400) entspricht, umfasst; und
eine Beleuchtungssteuerungseinheit zum selektiven Aktivieren der Anzeige der Kennzeichnung, die der wenigstens einen Lage des Tastenfelds (400) entspricht, als Reaktion auf die Lage des Tastenfelds (400).

8. Tragbares Computergerät nach einem der Ansprüche 1 bis 7, wobei
die Benutzerschnittstelle (190) ferner einen Touchscreen (220) mit wenigstens einem berührungsempfindlichen Bereich (222) zum Eingeben von Anweisungen umfasst;
wobei die Steuerungseinheit (210) ferner konfiguriert ist, um wenigstens ein Icon (226), das dem wenigstens einen berührungsempfindlichen Bereich (222) des Touchscreens (220) entspricht, anzuzeigen und basierend auf dem Lagesignal, das die Lage der Anzeigeeinheit (200) angibt, wenigstens eine von der Lage und der Position des dargestellten Icons (226) anzupassen; und
eine Korrelationseinheit (240) zum Korrelieren des wenigstens einen berührungsempfindlichen Bereichs (222) mit dem wenigstens einen angezeigten Icon (226).

9. Tragbares Computergerät nach einem der Ansprüche 1 bis 8, wobei die Navigationseinheit (110), die Anzeigeeinheit (200), die Steuerungseinheit (210) und die Benutzerschnittstelle (190) angepasst sind, um in einer Fahrzeughauptkonsole integriert zu werden und über einen Datenbus miteinander verbunden sind.

10. Tragbares Computergerät nach einem der Ansprüche 1 bis 9, wobei die Positionsbestimmungssystemeinheit (120) Signale, die von einem Satellitenpositionsbestimmungssystem bereitgestellt werden, an die Navigationseinheit (110) ausgibt.

11. Verfahren zum Anzeigen von Informationsinhalt, einschließlich geografischer Navigationsdaten und Kartendaten, auf einem tragbaren Computergerät (100), das eine Anzeigeeinheit (200) umfasst, die angepasst ist, um im Verhältnis zu einem Betrachter in einer durch die Anzeigeeinheit (200) definierten Ebene von einer ersten Lage in eine zweite Lage gedreht zu werden, wobei das Verfahren folgende Schritte umfasst:
Empfangen von geografischen Standortkoordinaten und Ausgeben von Positionsdaten entsprechend einem Standort des tragbaren Computergeräts (100);
Empfangen eines Lagesignals, das eine Lage der Anzeigeeinheit (200) angibt;
Abrufen der geografischen Navigationsdaten von einem Speichermedium und Bestimmen der anzuzeigenden geografischen Navigationsdaten basierend auf dem Lagesignal;
Anpassen der Lage der Anzeige des Informationsinhalts als Reaktion auf das Lagesignal;
Anzeigen des Informationsinhalts in einem Anzeigefenster der Anzeigeeinheit (200) gemäß der Lage der Anzeigeeinheit (200); und
automatisches Erkennen einer aktuellen Lage der Anzeigeeinheit (200) im Verhältnis zur Richtung der Schwerkraft unter Verwendung eines Schwerkraftsensors und Ausgeben eines Lagesignals, das die aktuelle Lage der Steuerungseinheit angibt;
**dadurch gekennzeichnet, dass**, wenn die Anzeigeeinheit (200) von der ersten Lage in die zweite Lage gedreht wird während eine Kartenansicht angezeigt wird, die Lage und der Inhalt der Anzeige des Informationsinhalts als Reaktion auf das Lagesignal derart angepasst werden, dass die Lage und der Größenmaßstab der Kartenansicht im Verhältnis zum Betrachter gleich bleiben, während neue Kartendaten, die in der ersten Lage nicht angezeigt wurden, entlang einer Richtung angezeigt werden, die mit einer Kante des Anzeigefensters gleichgerichtet ist, die in der zweiten Lage länger ist als entlang der gleichen Richtung in der vorherigen ersten Lage.

12. Verfahren nach Anspruch 11, das ferner den Schritt des Einstellens eines manuellen Modus zum Bestimmen der Lage der Anzeigeeinheit (200) umfasst.

13. Verfahren nach Anspruch 12, das ferner den Schritt des Eingebens des Lagesignals der Anzeigeeinheit (200) umfasst, wenn der eingestellte Modus der manuelle Modus ist.

## Revendications

1. Ordinateur de poche permettant d'afficher un contenu informatif comprenant des données de navigation géographique et des données cartographiques, l'ordinateur de poche (100) comprenant :
une unité de navigation (110) permettant de recevoir des signaux indiquant les coordonnés de localisation géographique provenant d'une unité d'un système de positionnement (120) et permettant d'envoyer des signaux indiquant la localisation géographique de l'ordinateur de poche (100) ;
une unité d'affichage (200) permettant d'afficher le contenu informatif dans une fenêtre d'affichage et adaptée pour être pivotée par rapport à un observateur dans un plan défini par ladite unité d'affichage (200) d'une première orientation à une deuxième orientation ; et
une unité de commande (210) permettant de commander l'unité d'affichage (200); dans lequel l'unité de commande (210) est adaptée pour récupérer les données de navigation géographique à partir d'un support de stockage et de déterminer les données de navigation géographique devant être affichées en fonction du signal d'orientation ; et
une unité de détection de l'orientation (230) comprenant un capteur de gravité adapté pour automatiquement détecter une orientation actuelle de l'unité d'affichage (200) par rapport à la direction de la gravité, et d'émettre un signal d'orientation indiquant l'orientation actuelle de l'unit de commande (210) ;
**caractérisé en ce que** l'unité d'affichage (200) est pivotée de sa première orientation dans une deuxième orientation alors qu'une vue de carte est affichée,
l'unité de commande (210) est configurée pour recevoir ledit signal d'orientation indiquant la deuxième orientation de l'unité d'affichage (200), afin de traiter ledit signal d'orientation et d'adapter l'orientation et le contenu de l'affichage du contenu informatif en réponse audit signal d'orientation de sorte que l'orientation et l'échelle de la carte restent les mêmes par rapport à l'observateur, alors que de nouvelles données de carte, qui n'étaient pas affichées dans la première orientation, sont affichées suivant une direction alignée avec un bord plus long de la fenêtre d'affichage dans la deuxième orientation que le long de la même direction dans la première orientation précédente.

2. Ordinateur de poche selon la revendication 1, comprenant également :
un moyen d'accès (160) permettant d'accéder au support de stockage, ledit support de stockage mémorisant les données de navigation géographique ;

3. Ordinateur de poche selon la revendication 2, dans lequel ledit capteur de gravité est adapté pour détecter l'orientation spatiale d'un point de l'unité d'affichage (200) par rapport à un autre point de l'unité d'affichage (200).

4. Ordinateur de poche selon l'une quelconque des revendications 1 à 3, comprenant également :
une interface appareil-utilisateur (190) permettant de recevoir une autre entrée de l'orientation de l'unité d'affichage (200) et pour émettre vers l'unité de commande (210) un signal d'orientation respectif indiquant l'orientation de l'unité d'affichage (200).

5. Ordinateur de poche selon l'une quelconque des revendications 1 à 4, comprenant également :
un panneau à touches (400) permettant de saisir les instructions, l'orientation dudit panneau à touches (400) étant changeable ;
ledit panneau à touches (400) comprenant :
au moins une touche (410) permettant de saisir des instructions, ladite touche (410) ayant au moins une étiquette (420) correspondant à au moins une orientation du panneau à touches (400) ;
au moins un composant d'éclairage (430) pour éclairer chaque étiquette (420) correspondant à une orientation du panneau à touches (400) ; et
une unité de commande de l'éclairage (440) permettant d'activer sélectivement le composant d'éclairage (430) en réponse à l'orientation dudit panneau à touches (400).

6. Ordinateur de poche selon la revendication 5, comprenant également une plaque avant adaptée pour rendre invisible au moins une desdites étiquettes (420).

7. Ordinateur de poche selon l'une quelconque des revendications 1 à 4, comprenant également :
un panneau à touches (400) pour saisir les instructions, l'orientation dudit panneau à touches (400) étant changeable ;
ledit panneau à touches (400) comprenant :
au moins une touche permettant de saisir des instructions, ladite touche comportant un écran d'affichage pour afficher au moins une étiquette correspondant à au moins une orientation du panneau à touche (400) ; et
une unité de commande de l'éclairage permettant d'activer sélectivement l'affichage de l'étiquette correspondant à au moins une orientation du panneau à touches (400) en réponse à l'orientation dudit panneau à touches (400).

8. Ordinateur de poche selon l'une quelconque des revendications 1 à 7, dans lequel ladite interface appareil-utilisateur (190) comprend également un écran tactile (220) avec au moins une zone sensible au toucher (222) permettant de saisir des instructions ;
ladite unité de commande (210) étant davantage configurée pour afficher au moins une icône (226) correspondant à l'au moins une zone sensible au toucher (222) de l'écran tactile (220) et pour adapter au moins l'une de l'orientation et de la position de l'icône affichée (226) basé sur le signal d'orientation indiquant l'orientation de l'unité d'affichage (200) et
une unité de corrélation (240) pour corréler l'au moins une zone sensible au toucher (222) avec au moins une icône affichée (226).

9. Ordinateur de poche selon l'une quelconque des revendications 1 à 8, dans lequel l'unité de navigation (110), l'unité d'affichage (200), l'unité de commande (210) et l'interface appareil-utilisateur (190) sont adaptés pour être intégrés dans une unité à l'avant du véhicule et sont connectés les uns aux autres par un bus de données.

10. Ordinateur de poche selon l'une quelconque des revendications 1 à 9, dans lequel l'unité du système de positionnement (120) émet, vers l'unité de navigation (110), des signaux provenant d'un système de positionnement par satellite.

11. Procédé permettant d'afficher un contenu informatif, comprenant des données de navigation géographique et des données cartographiques, sur un ordinateur de poche (100) comprenant une unité d'affichage (200) adaptée pour être pivotée par rapport à un observateur dans un plan défini par l'unité d'affichage (200) à partir d'une première orientation vers une deuxième orientation, le procédé comprenant les étapes suivantes :
la réception de coordonnées de localisation géographique et l'émission des données de position selon une localisation d'un ordinateur de poche (100) ;
la réception d'un signal d'orientation indiquant une orientation de l'unité d'affichage (200) ;
la récupération des données de navigation géographique d'un support de stockage et la détermination des données de navigation géographique devant être affichées selon le signal d'orientation ;
l'adaptation de l'orientation de l'affichage du contenu informatif en réponse au signal d'orientation ;
l'affichage du contenu informatif dans une fenêtre d'affichage de l'unité d'affichage (200) en conformité avec ladite orientation de l'unité d'affichage (200) ; et
la détection automatique de l'orientation actuelle de l'unité d'affichage (200) par rapport à la direction de la gravité à l'aide d'un capteur de gravité, et l'émission d'un signal d'orientation indiquant l'orientation actuelle de l'unité de commande;
**caractérisé en ce que**
si l'unité d'affichage (200) est pivotée de sa première orientation vers une deuxième orientation alors qu'une vue de carte est affichée, adaptation de l'orientation et du contenu de l'affichage du contenu informatif en réponse audit signal d'orientation de sorte que l'orientation et de l'échelle de la vue de la carte reste le même par rapport au observateur, alors que de nouvelles donnés cartographiques, qui n'ont pas été affichées dans la première orientation, sont affichées le long d'une direction alignée avec un bord plus long de la fenêtre de l'afficheur que le long de la même direction dans la première orientation précédente.

12. Procédé selon la revendication 11, comprenant également l'étape de réglage d'un mode manuel permettant de déterminer l'orientation de l'unité d'affichage (200).

13. Procédé selon la revendication 12, comprenant également l'étape de saisie du signal d'orientation de l'unité d'affichage (200) lorsque ledit mode est en mode manuel.
